(19) Europäisches Patentamt
European Patent Office
Office européen des brevets

(11) Publication number: 0 200 267 B1

(12) EUROPEAN PATENT SPECIFICATION

(45) Date of publication of patent specification: 09.11.88

(51) Int. Cl.$^4$: C 07 F 9/09, A 61 K 31/66

(21) Application number: 86200707.7

(22) Date of filing: 24.04.86

# (54) Butane-1,2,3-triol derivatives, processes for preparing the same and pharmaceutical compositions containing the same.

(30) Priority: 27.04.85 JP 91697/85

(43) Date of publication of application:
05.11.86 Bulletin 86/45

(45) Publication of the grant of the patent:
09.11.88 Bulletin 88/45

(84) Designated Contracting States:
CH DE FR GB LI

(56) References cited:
EP-A-0 070 433
DE-A-3 212 387

BIOCHEMICAL AND BIOPHYSICAL RESEARCH COMMUNICATIONS, vol. 90, no. 4, 29th October 1979, pages 1194-1200, Academic Press Inc.; M.L. BLANK et al.: "Antihypertensive activity of an alkyl ether analog of phosphatidylcholine"

JOURNAL OF MEDICINAL CHEMISTRY, vol. 28, no. 9, September 1985, pages 1181-1187,

Protein, Nucleic Acid and Enzyme, Vol.27, No.10 pp 1342.47, 1982.

(73) Proprietor: TEIKOKU HORMONE MFG. CO., LTD.
5-1, 2-chome, Akasaka
Minato-ku, Tokyo (JP)

(72) Inventor: Ohno, Masaji
1565-13, Koshigoe
Kamakura-shi Kanagawa-ken (JP)
Inventor: Fujita, Kagari
2-19-36, Ohfuna
Kamakura-shi Kanagawa-ken (JP)
Inventor: Shiraiwa, Masafumi
1198, Kamiodanaka Nakahara-ku
Kawasaki-shi Kanagawa-ken (JP)

(74) Representative: van der Beek, George Frans et al
Nederlandsch Octrooibureau Johan de Wittlaan 15 P.O. Box 29720
NL-2502 LS 's-Gravenhage (NL)

(56) References cited:
American Chemical Society, US; A. WISSNER et al.: "Analogues of platelet activating factor (PAF), 2.1 Some modifications of the glycerine backbone"

EP 0 200 267 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to novel butane-1,2,3-triol derivatives having excellent antihypertensive activity, to processes for the preparation of the novel compounds as well as to pharmaceutical compositions containing said compounds.

It is known that 1-O-alkyl-2-O-acetyl-sn-glycero-3-phosphorylcholine (Platelet-activating factor (PAF) has recently been identified as an acetyl glyceryl ether phosphorylcholine, i.e., 1-O-hexadecyl/octadecyl-2-acetyl-sn-glyceryl-3-phosphorylcholine (Hanahan D.J., *et al., J. Biol. Chem. 255:* 5514, 1980)) has a strong platelet aggregation activity, hypotensive activity and bronchoconstrictive activity. The alkyl group analogues substituted at the 1-O-position and the acyl group analogues at the 2-O-position have been investigated for a long period, and a variety of papers have been reported. (Protein, Nucleic Acid and Enzyme, Vol. 27, No. 10, pp. 1342—47, 1982 and Japanese Kokai Tokkyo Koho JP 83013592).

1-O-alkyl-2-O-acetyl-sn-glycero-3-phosphorylcholine has a good antihypertensive activity, but also a strong platelet aggregation activity and, therefore, cannot be acceptable as an antihypertensive agent. The inventors of this application have been interested in and paid a great attention to the hypotensive activity of PAF and have carried out intensive investigations to find a favorable compound having only hypotensive activity and showing much less platelet aggregation activity from the synthetic glycerophosphorylcholine derivatives. The present invention satisfies the abovementioned features of the selective activities and provides the highly potential biologically active compound having high hypotensive activity and much less platelet aggregation activity.

It was found that the compounds represented by the formula (I) and the formula (II)

(I) 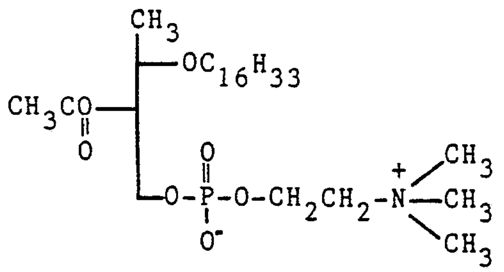

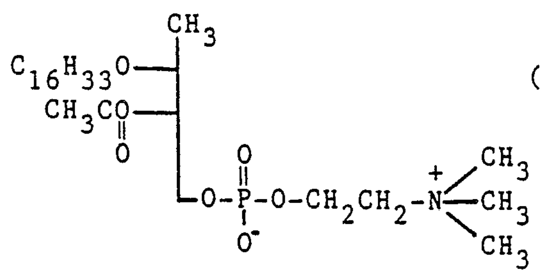 (II)

have excellent hypotensive activity and much less platelet aggregation activity and may be used as acceptable antihypertensive agents.

Therefore, it is an object of the present invention to provide the novel compounds having the formulae (I) and (II).

It is another object of the invention to provide a process for the preparation of the compound having the formula (I) which comprises acetylating a compound having the formula (III)

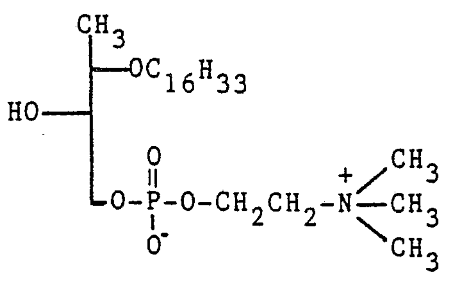 (III)

in an organic solvent in the presence of base.

It is still another object of this invention to provide a process for the preparation of the compound of the formula (II) which comprises acetylating a compound of the formula (IV):

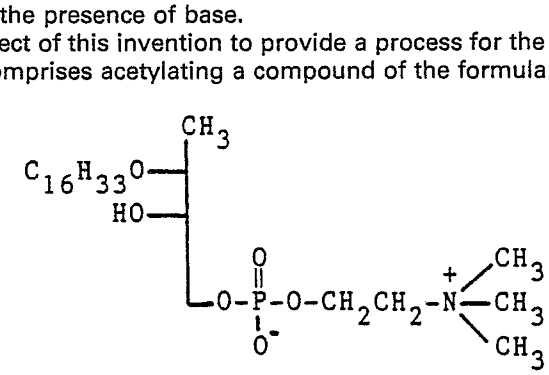 (IV)

in an organic solvent in the presence of base.

A further object of the invention is to provide pharmaceutical compositions having antihypertensive activity containing a compound having the formula (I) or (II) together with a pharmaceutically acceptable carrier.

The foregoing and other objects of the present invention will be elucidated in the following description.

Detailed Description of Preferred Embodiments

In accordance with the present invention, the novel compound of the formula (I) is produced by acetylating a compound of the formula (III) in an organic solvent in the presence of base.

In accordance with the present invention, the novel compound of the formula (II) is produced by acetylating a compound of the formula (IV) in an organic solvent in the presence of base.

Acetic anhydride or acetyl chloride is suitable as acetylating agent. The base may be an ordinary base such as pyridine, triethylamine and the like.

The solvents used in this invention may be an inert solvent such as chloroform and the like, but if necessary the acetylating agent or the base that is used in the process of the present invention can be used as a solvent.

The acetylation in the process of the present invention is carried out at the temperature ranging from the room temperature to the boiling point of the solvent used, preferably under the milder condition for the period of about 30 minutes to several hours.

After the reaction is completed, the solvent and the base and the like used are removed, and then the resulting mixture is purified by a column chromatography to yield the desired compound. The chemical structures are determined by measuring IR, NMR and mass spectra etc.

It is noted that the compounds having the formula (I) or (II) may be prepared in a way known for analogous compounds.

The starting materials, which are novel compounds, represented by the formula (III) and the formula (IV) can be prepared, for example, by the process of the reaction scheme mentioned below.

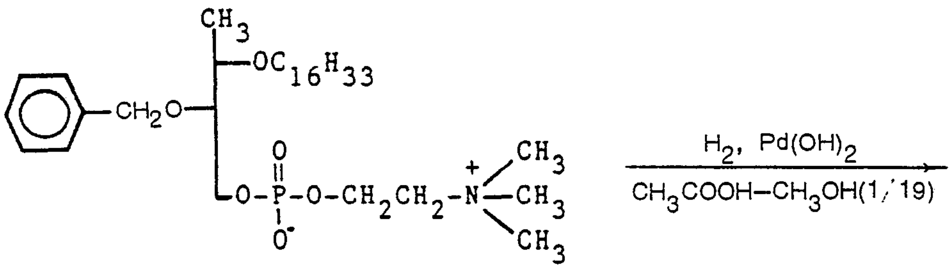


(III)

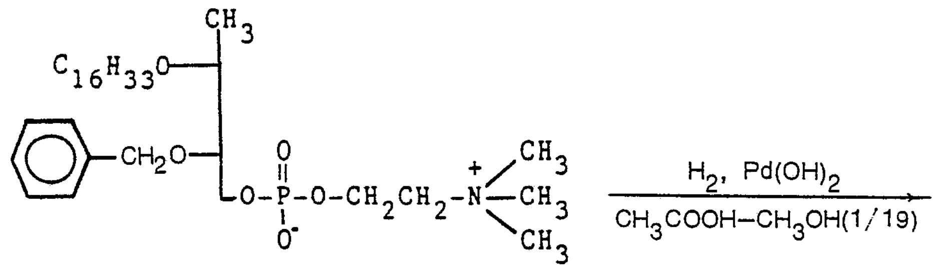


(IV)

The following examples illustrate the practice of the invention, but should not be interpreted as limiting the invention.

Example 1:

Preparation of (2S,3S)-1-(2-trimethylammonioethyl)phosphoryl-2-acetoxy-3-hexadecyloxybutane (Compound 1)

1 ml of acetic anhydride was added to a solution of 134 mg of (2S,3S)-1-(2-trimethylammonioethyl)phosphoryl-3-hexadecyloxybutan-2-ol in 2 ml of dry pyridine, and the resulting mixture was stirred for three hours at 60°C. The solvent was removed at 60°C and the residue was purified by silica gel column chromatography (chloroform:methanol:water = 65:35:6) to yield 112 mg of the objective compound in form of white wax having a melting point of 222°C to 230°C and the following characteristics: specific rotation (α)$_D^{21}$ −1.11° (C 1.80, $CHCl_3$:$CH_3OH$ = 1:1), FAB —MS M/e 538 ($M^+$ + 1)

NMR (90 MHz, $CDCl_3$:$CD_3OD$ = 4:1, TMS, δ (ppm)); 0.88 (t, J=7Hz, 3H), 1.16 (d, J=6.8Hz, 3H), 1.26 (s, 26H), 1.45—1.70 (m, 2H), 2.08 (s, 3H), 3.26 (s, 9H), 3.32—3.85 (m, 5H), 3.86—4.46 (m, 4H), 4.90—5.15 (m, 1H):

IR (KBr, $cm^{-1}$); 3420, 2920, 2840, 1732, 1465, 1235.

Example 2:

Preparation of (2S,3S)-1-(2-trimethylammonioethyl)phosphoryl-2-acetoxy-3-hexadecyloxybutane (Compound 2)

1 ml of acetic anhydride was added to a solution of 142 mg of (2S,3S)-1-(2-trimethylammonioethyl)phosphoryl-3-hexadecyloxybutan-2-ol in 2 ml of dry pyridine and the mixture was stirred for 3 hours at a temperature of 60°C and concentrated in vacuum to obtain the residue. The resulting residue was purified by a silica gel column chromatograph (chloroform:methanol:water = 65:35:6) to yield 109 mg of the objective compound in form of white wax, having a melting point of 232°C to 240°C and the following characteristics: specific rotation $(\alpha)_D^{21}$ −7.03° (C 1.80, $CHCl_3$:$CH_3OH$ = 1:1), FAB—MS M/e 538 ($M^+$ + 1)

NMR (90 MHz, $CDCl_3$:$CD_3OD$ = 3:1, TMS, δ (ppm)); 0.88 (t, J=7Hz, 3H), 1.22 (d, J=6.3Hz, 3H), 1.26 (s, 26H), 1.45—1.70 (m, 2H), 2.08 (s, 3H), 3.24 (s, 9H), 3.34—3.90 (m, 5H), 3.88—4.448 (m, 4H), 4.90—5.15 (m, 1H),

IR (KBr, $cm^{-1}$); 3420, 2920, 2840, 1732, 1465, 1235.

Activity of the inventive compounds — the result of biological tests

(1) Hypotensive activity

Male Wistar rats weighing about 400 g were anaesthetized with sodium pentobarbital (60 mg/kg, i.p.). The left femoral vein and the femoral artery were canulated from drug administration and blood pressure monitoring, respectively. The change of the blood pressure was measured by means of a pressure transducer and recorded on the polygraph. Each of the test compounds (which was dissolved in physiological saline or suspended with 2% Tween 80 physiological saline solution) was injected into the left femoral vein through the canula. The results are shown in Table 1.

TABLE 1

| | Dose ( g/kg) | Max. fall in blood press. (%) | Fall in blood pressure after the injection (%) | | | | | | | | |
|---|---|---|---|---|---|---|---|---|---|---|---|
| | | | 1 min. | 2 min. | 3 min. | 5 min. | 10 min. | 15 min. | 20 min. | 30 min. | 40 min. |
| Compound 1 | 5000 | 70 | 70 | 69 | 69 | - | - | - | - | - | - |
| | 500 | 72 | 63 | 72 | 49 | 60 | 69 | - | - | - | - |
| | 50 | 59 | 49 | 47 | 47 | 49 | 59 | 57 | 49 | 43 | 33 |
| | 5 | 48 | 19 | 10 | 10 | 10 | 10 | 6 | - | - | - |
| Compound 2 | 5000 | 70 | 52 | 59 | 61 | 65 | 69 | 68 | 70 | 70 | 70 |
| | 500 | 50 | 39 | 46 | 36 | 35 | 24 | 20 | 19 | 17 | 16 |
| | 50 | 49 | 31 | 16 | 6 | 5 | 4 | - | - | - | - |
| | 5 | 33 | 17 | -4 | -4 | -4 | -4 | - | - | - | - |
| PAF | 1.5 | 52 | 52 | 52 | 49 | 42 | 37 | 5 | - | - | - |
| | 0.5 | 52 | 48 | 15 | 5 | 0 | - | - | - | - | - |

(2) Platelet aggregating activity

After $^{14}C$-labelled serotonin was incubated with a rabbit platelet-rich plasma (PRP) in accordance with the method disclosed in "Journal of Clinical Investigation, vol. 67, 903 (1981)" the test compounds were added to the serotonin incorporated PRP, and the activity thereof was measured by the amount of 50% release of serotonin. The results are shown in Table 2.

TABLE 2

| | Concentration of the test compound to induce 50 % release of serotinin (M) |
|---|---|
| PAF | $10^{-9}$ |
| Compound 1 | $1.8 \times 10^{-6}$ |
| Compound 2 | - (release of serotonin cannot be measured until $10^{-6}$ M) |

**Claims**

1. A compound represented by the formula (I) or the formula (II)

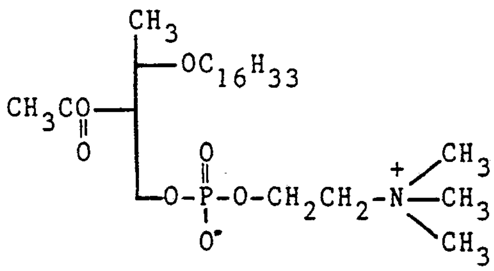

(I)

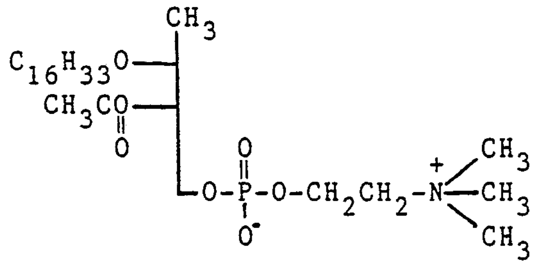

(II)

2. A process for the preparation of the compound having the formula I which comprises acetylating the compound having the formula (III)

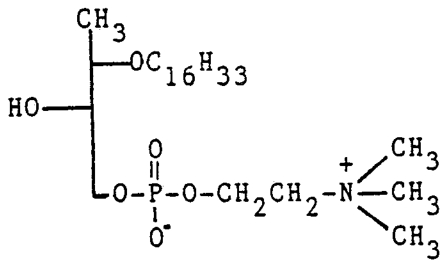

(III)

3. A process for the preparation of the compound having the formula (II) which comprises acetylating the compound having the formula (IV)

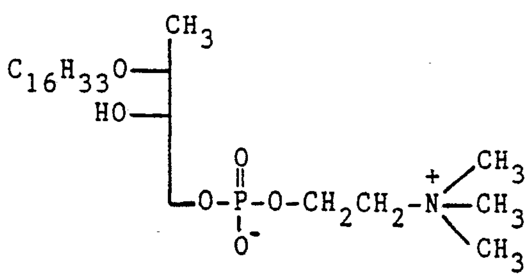

(IV)

4. Pharmaceutical composition having antihypertensive activity, characterized in that it contains a compound having the formula (I) or (II) together with a pharmaceutically acceptable carrier.

5. A compound represented by the formula (III) or (IV), suitable as starting material for the process according to claim 2 or 3 respectively.

**Patentansprüche**

1. Verbindung, die durch die Formel (I)

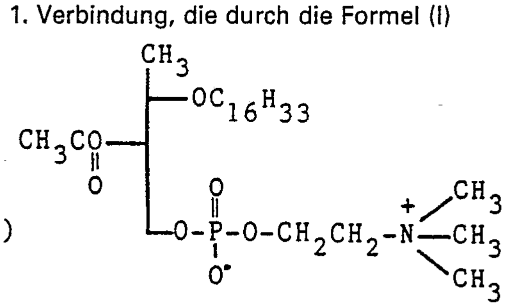

(I)

oder die Formel (II)

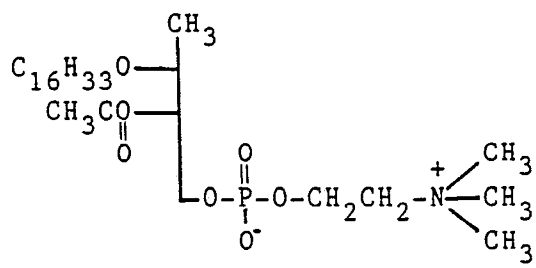

(II)

dargestellt ist.

2. Verfahren zur Herstellung der Verbindung der Formel (I), umfassend die Acetylierung der Verbindung nach Formel (III)

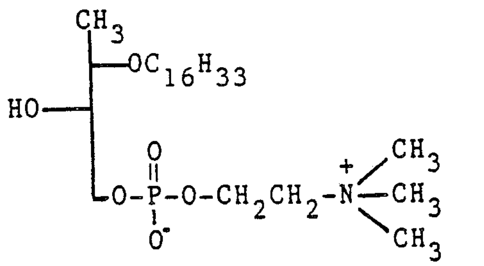

(III)

3. Verfahren zur Herstellung der Verbindung der Formel (II), umfassend die Acetylierung der Verbindung nach Formel (IV)

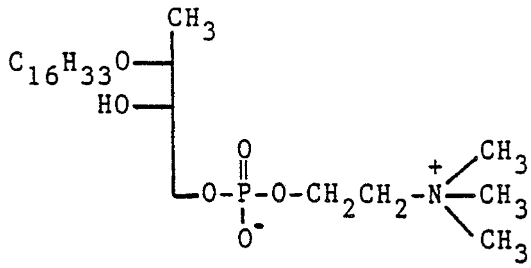

(IV)

4. Pharmazeutische Zusammensetzung mit antihypertensiver Aktivität, dadurch gekennzeichnet, dass sie eine Verbindung der Formel (I) oder (II) zusammen mit einem pharmazeutisch annehmbaren Träger enthält.

5. Verbindung, die durch die Formel (III) oder (IV) dargestellt ist, geeignet als Ausgangsstoff für das Verfahren nach Anspruch 2 bzw. 3.

**Revendications**

1. Composé représenté par la formule (I) ou la formule (II)

(I)

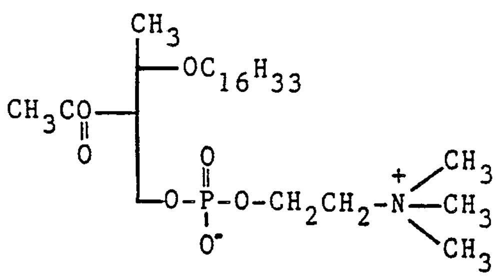

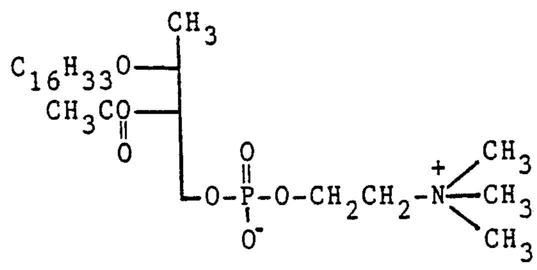

(II)

2. Procédé de préparation du composé de formule (I), comportant l'acétylation du composé de formule (III)

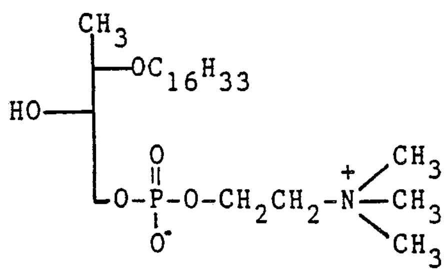

(III)

3. Procédé de préparation du composé de formule (II), comportant l'acétylation du composé de formule (IV)

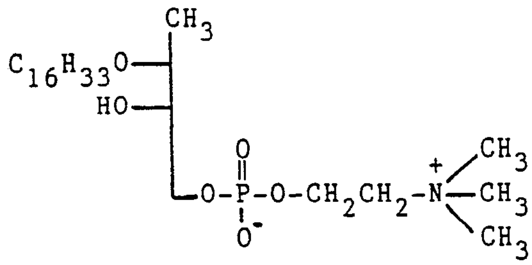

(IV)

4. Composition pharmaceutique ayant une activité antihypertensive, caractérisée en ce qu'elle contient un composé de formule (I) ou (II) simultanément avec un support pharmaceutiquement acceptable.

5. Composé représenté par la formule (III) ou (IV), convenant en tant que substance de départ pour le procédé selon la revendication respective 2 ou 3.